# EUROPEAN PATENT APPLICATION

(11) **EP 2 733 115 A1**
(43) Date of publication of application: **21.05.2014**
(21) Application number: 12306409.9
(22) Date of filing: 14.11.2012
(51) Int. Cl.: C01B 3/38, C01B 3/50, C01B 3/56

(54) **Process for recovering hydrogen and carbon dioxide**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: TERRIEN, Paul, BALTIMORE, MD Maryland 21217 (US); CHAUBEY, Trapti, WILMINGTON, DE Delaware 19808 (US); SHANBHAG, Purushottam V., CLAYMONT, DE Delaware 19703 (US); GROVER, Bhadra S., SUGAR LAND, TX Texas 77479 (US); VAUK, Dennis A., HOUSTON, TX Texas 77095 (US); DARDE, Arthur, 75005 PARIS (FR); MARTY, Pascal, 94360 BRY SUR MARNE (FR); MONEREAU, Christian, 34000 MONTPELLIER (FR)
(74) Representative: Beroud, Amandine

(57) **Abstract**

This present invention provides a method to recover hydrogen and carbon dioxide, preferably at least 50%, even more preferably at least 80% and most preferably at least 90% of the carbon dioxide contained in a syngas stream (15). The proposed use combines hydrogen selective membranes (42, 7) and carbon dioxide selective membranes (10) together with carbon dioxide separation units (4) and pressure swing adsorption unit (0) such that hydrogen and carbon dioxide are produced.

## Description

The present invention relates to a process for recovering hydrogen and capturing carbon dioxide utilizing a carbon dioxide separation unit and three membrane separation units. The present invention further provides for a process within a hydrogen generation plant to increase recovery of hydrogen and capture equal to or greater than 80% of the carbon dioxide in a syngas stream.

Hydrogen is an important feedstock for many chemical and petrochemical processes. However, hydrogen production is associated with large amounts of carbon dioxide (CO₂) emissions. Accordingly, it is desirable to not only provide a means to produce hydrogen but also a means to recover the carbon dioxide associated with the hydrogen production. With increased emission regulations and a possible future CO₂ tax there is a need to develop carbon dioxide capture solutions. The cost of capture can impact the cost of hydrogen production. Therefore, it is important to develop a solution with lower cost of capture and improved efficiency of hydrogen production plant.

Physical or chemical solvents such as rectisol, selexol, amines, potassium carbonate etc. have been used traditionally for many decades to absorb carbon dioxide from syngas in hydrogen plants, HYCO (hydrogen and carbon monoxide co-production) plants.

However, the process of solvent absorption requires absorber and stripper columns with very high capital costs. The scrubbing solvent needs to be regenerated by temperature swing or pressure swing in order to release the absorbed carbon dioxide. The regeneration process can involve large amounts of steam or compression energy resulting in high operating costs. Another disadvantage of using the solvent absorber is that the purity of the recovered carbon dioxide may not be very high and further processing using liquefaction and partial condensation may be needed. Example U.S. Patent No. 6,500,241 describes the use of acid gas removal unit and auto refrigeration unit for removing carbon dioxide from syngas and PSA off-gas. U.S. Patent No. 4,553,981 and U.S. Patent No. 7,682,597 describe the use of a carbon dioxide scrubber downstream of the shift reactor to remove carbon dioxide from syngas.

Carbon dioxide can be captured from a hydrogen plant by using cryogenic processing ,namely partial liquefaction or distillation at low temperatures. Such a process is favorable at higher carbon dioxide concentrations. In hydrogen plants, carbon dioxide can be captured from several different locations in the process train including process syngas or flue gas. Flue gas processing can pose several challenges because of many impurities coming from the combustion that therefore make the capture process very expensive. Carbon dioxide from process gas can be captured from high pressure syngas before pressure swing adsorption unit or from pressure swing adsorption off-gas. The concentration of carbon dioxide in the gas before pressure swing adsorption is much lower than in the pressure swing adsorption off-gas and hence the pressure swing adsorption off-gas is more suitable for cryogenic separation. U.S. Patent No. 6,301,927 provides an example of an auto refrigeration process that employs the use of a compression and expansion turbine to liquefy carbon dioxide and further separate it from other gases.

Another patent, FR Patent No. 2877939 provides a way to remove carbon dioxide from pressure swing adsorption off-gas by using successive steps of compression and cooling to remove carbon dioxide by partial liquefaction and/or distillation. This patent describes the use of a membrane on the non-condensable gas to permeate hydrogen and recycle hydrogen back to the pressure swing adsorption unit in order to increase hydrogen recovery. However, carbon dioxide recovery for the unit is not very high. In U.S. Patent No. 4,639,257, provides the use of carbon dioxide selective membrane in combination with distillation column for a carbon dioxide containing gas mixture in order to increase the recovery of carbon dioxide. A carbon dioxide selective membrane is used on the overhead of the distillation column with carbon dioxide rich permeate recycled back to feed or to the distillation column itself. Another carbon dioxide selective membrane is proposed for the feed gas before the distillation column in case the concentration of carbon dioxide is below equilibrium concentration at the freezing temperature of the mixture. However, this patent is suitable for a gas mixture containing carbon dioxide, nitrogen, methane and hydrocarbon. U.S. Patent Publication No. 2010/0129284, describes the use of a hydrogen selective membrane, a carbon dioxide selective membrane in combination with carbon dioxide liquefier in order to increase the recovery of hydrogen and carbon dioxide. However, carbon dioxide selective membrane is always located upstream of the liquefier requiring additional compression of the carbon dioxide permeate from the membrane feeding to the liquefier.

Hydrogen plants can emit large quantities of carbon dioxide into the atmosphere. Carbon dioxide capture solutions have been proposed in the past using several different separation techniques like absorption, cryogenic, adsorption or membrane. There is always some hydrogen loss from pressure swing adsorption processes. In addition, there is some carbon dioxide loss from the capture process which can be recovered by improving the carbon dioxide capture process. If additional hydrogen and carbon dioxide can be recovered from the capture process there can be significant savings with regards to the size of reformer, natural gas consumption, carbon dioxide tax etc. for the same size hydrogen plant.

Accordingly, there still exists a need for a process to recover both hydrogen and carbon dioxide with a carbon dioxide recovery rate of at least 50% from syngas, preferably of at least 80%, more preferably of at least 90%, as well as a process for producing hydrogen in a hydrogen generation plant that allows for the overall capture of at least 50% of the carbon dioxide, preferably of at least 75%, in the hydrogen production process.

This present invention provides a method to more efficiently recover hydrogen and carbon dioxide, preferably at least 50%, even more preferably at least 80% and most preferably at least 90% of the carbon dioxide contained in the syngas stream. The proposed use combines hydrogen selective membranes and carbon dioxide selective membranes together with carbon dioxide separation units such that hydrogen and carbon dioxide are produced with increased recoveries and improved process efficiency. Increased hydrogen recovery by using hydrogen selective membranes can reduce the size of the syngas producing unit, natural gas consumption for feed and fuel for the same size hydrogen plant. For the overall hydrogen producing unit, the capture of carbon dioxide can be at least 50%, preferably at least 75%. Carbon dioxide emission of the overall hydrogen producing unit includes CO₂ in the syngas and CO₂ emission from the fueling of the syngas producing plant. Increased carbon dioxide recovery will reduce the emissions of carbon dioxide into the atmosphere and will result in cost savings in case of a carbon tax.

A solution of the invention is so a process for producing hydrogen and capturing carbon dioxide in a hydrogen generation plant, the process comprising the steps of:
a) subjecting a syngas 15 coming from a syngas producing unit 31 to a process unit 0 to obtain a hydrogen product stream 23 and a hydrogen depleted process stream 1;
b) compressing at least a portion of the process stream 1 in a compression unit 40 and passing the compressed stream 41 through a first hydrogen selective membrane separation unit 42 to form a first hydrogen rich permeate stream 43 with the remaining components in the compressed process stream 41 forming a first hydrogen lean residue stream 44;
c) cooling to a temperature equal to or less than -10°C , and purifying/separating the hydrogen lean residue stream 44 in a carbon dioxide separation unit 4 to produce a carbon dioxide rich liquid stream 6 and a carbon dioxide lean non-condensable stream 5;
d) withdrawing the carbon dioxide lean non-condensable stream 5 from the carbon dioxide separation unit 4 and passing the carbon dioxide lean non-condensable stream 5 through a second hydrogen selective membrane separation unit 7 to form a hydrogen rich permeate stream 8 with the remaining components in the carbon dioxide lean non-condensable stream 5 forming a hydrogen lean residue stream 9;
e) passing the hydrogen lean residue stream 9 through a carbon dioxide selective membrane separation unit 10 to form a carbon dioxide enriched permeate stream 11 with the remaining components in the hydrogen lean residue stream 9 forming a carbon dioxide depleted residue stream 12;
process in which:
- at least a part of the hydrogen rich permeate stream 43 of the first hydrogen selective membrane separation unit 42 is recycled for use 43.5 as a supplemental feed stream and/ or as a fuel in the syngas producing unit 31, and/or 43.2 to the process unit 0 and/or as a fuel (43.4) in the optional clean energy production unit;
and
- at least a part of the hydrogen rich permeate stream 8 of the second hydrogen selective membrane separation unit 7 is recycled for use as a supplemental feed stream and/or as a fuel 8.5 in the syngas producing unit 31, and/or 8.2 to the process unit 0 and/or as a fuel 8.4 in the optional clean energy production unit;
and
- at least a part of the carbon dioxide enriched permeate stream 11 of the carbon dioxide selective membrane separation unit 10 is recycled to the carbon dioxide separation unit 4
and
- the carbon dioxide depleted residue stream 12 of the carbon dioxide selective membrane separation unit 10 is recycled to be used as a supplemental feed stream and/or as a fuel 12.5 for the syngas producing unit 31 or in another process.

Optionally, the step c) comprises a compression before cooling.

According to particular embodiments of the present invention, the process is characterized by the following characteristics:
- at least a portion of the produced hydrogen 23 is used as fuel 23.2 in a clean energy production unit.
- the carbon dioxide depleted residue stream 12 of the carbon selective membrane separation unit 10 is recycled in the clean energy production unit.
- a hydrocarbon containing feed stream 16 is treated in the syngas producing unit 31 to obtain a syngas 15;
- the syngas producing unit 31 is a hydrocarbon Steam Reformer
- at least a portion 23.1 of the hydrogen product stream 23 is used as a fuel for the syngas producing unit 31.
- the capture rate of carbon dioxide from the syngas 15 is equal to or greater than 80%, preferably is equal to or greater than 90%.
- the overall capture rate of carbon dioxide from the hydrogen production process is equal to or greater than 50%, preferably equal to or greater than 75%.
- the process unit 0 is a pressure swing adsorption unit and the process stream 1 is a tail gas from the pressure swing adsorption unit.
- the separation and purification of the cooled process stream in the carbon dioxide separation unit 4 is carried out by single or multi-step partial liquefaction, compression and distillation or any combination of single or multi-step partial liquefaction, compression and distillation.
- the carbon dioxide rich liquid stream 6 that is withdrawn is vaporized to produce a carbon dioxide rich gas stream or pumped and optionally heated to produce a high pressure CO₂ stream.
- the process stream is subjected to a purification unit to remove impurities such as water, hydrocarbons, alcohols, NH₃, H₂S.., and preferentially the purification unit comprises an adsorption unit
- the process stream is compressed to a pressure above 35 bar abs and is cooled to a temperature equal to or less than -30°C.
- the first hydrogen rich permeate stream 43 and/or the second hydrogen rich permeate stream 8 is subjected to a shift reaction in an optional water gas shift reactor prior to being recycled , preferentially the water gas shift reaction is a low temperature water gas shift reaction.
- the carbon dioxide lean non-condensable stream 5 is subjected to a shift reaction in an optional water gas shift reactor prior to being passed thorough the hydrogen and carbon dioxide membrane separation units 7, 10, preferentially the water gas shift reaction is a low temperature water gas shift reaction.
- at least one stream among the first hydrogen rich permeate stream 43, the second hydrogen rich permeate stream 8, the carbon dioxide enriched permeate stream 11 is withdrawn at least 2 different pressures.

Figure 1 provides a general schematic of the present process.
Figure 2 (2.a; 2.b; 2.c) provides 3 views of different variations of the carbon dioxide separation unit of Figure 1.
Figure 3 provides a detailed view of the carbon dioxide separation unit.
Figure 4 provides a detailed view of the syngas producing unit (steam reformer case) with the potential recycles.

It is possible to efficiently recover hydrogen and carbon dioxide from process streams obtained from process units which have a purification step that provides a hydrogen rich fraction which can be utilized downstream (for instance, in the production of electricity) as in the present process. While overcoming many of the disadvantages of the prior art systems that deal with the recovery of hydrogen and carbon dioxide from such streams, this can be accomplished by integrating a first hydrogen selective membrane separation unit, a carbon dioxide separation unit, a second hydrogen selective membrane separation unit and a carbon dioxide selective membrane separation unit into the process for treating streams taken from such process units in the manner noted herein. In addition, increased production of hydrogen and carbon dioxide capture of equal to or greater than 80% from syngas in hydrogen generation plants may also be accomplished by integrating a first hydrogen selective membrane separation unit, a carbon dioxide separation unit, a second hydrogen selective membrane separation unit and a carbon dioxide selective membrane separation unit into the schematic of a hydrogen generation plant by choosing the best locations to recycle some of the streams issued from these different units. One will note that fuelling a unit with hydrogen instead of hydrocarbons will produce water instead of CO₂ and can be seen as "capturing CO₂" by reference of the standard process.

The processes of the present invention will be further described with regard to the figures contained herein. These figures are included merely for illustration purposes and are not intended in any way to limit the processes of the present invention.

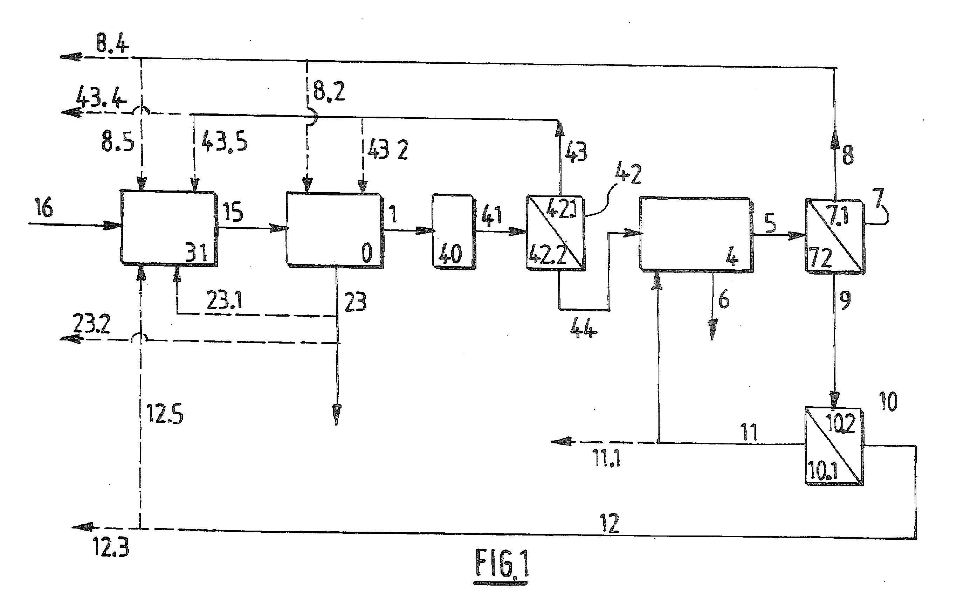

The general process of the present invention as depicted in Figure 1 involves the recovery of hydrogen and carbon dioxide from a process stream 1 that is obtained from a process unit 0. As used herein, the phrase "process unit" refers to any unit which includes a purification step that results in the production of a hydrogen fraction that can be used downstream. More specifically, the "process unit" is a unit in which as one step of the process, hydrogen is removed from a feed stream in such a manner that allows for the recovery of hydrogen in a more concentrated form than presented in the original noted feed stream - a hydrogen fraction that is the product stream 23 - and a tail gas stream that is the process stream 1.

The syngas 15 that is supplied to the process unit 0 can be coming from any syngas producing unit 31. For example, the syngas 15 may be produced from a reformer unit with a water gas shift unit and with or without a pre-reformer unit, a partial oxidation unit (POx), an autothermal reformer unit (ATR). It could be syngas from a coal gasification unit, a refinery off gas or any other gas mixture that contains hydrogen, carbon monoxide and carbon dioxide as components in the gas mixture In the more preferred situation, the syngas 15 will be the product of a hydrocarbon containing feed stream 16 that has been subjected to steam hydrocarbon reforming and water gas shift (not shown in Figure 1). In a still further embodiment, the syngas 15 will be the product of a gas stream that has been subjected to pre-reforming and steam hydrocarbon reforming and finally, the product of a gas stream that has been subjected to pre-reforming, steam hydrocarbon reforming and water gas shift (not shown in Figure 1).

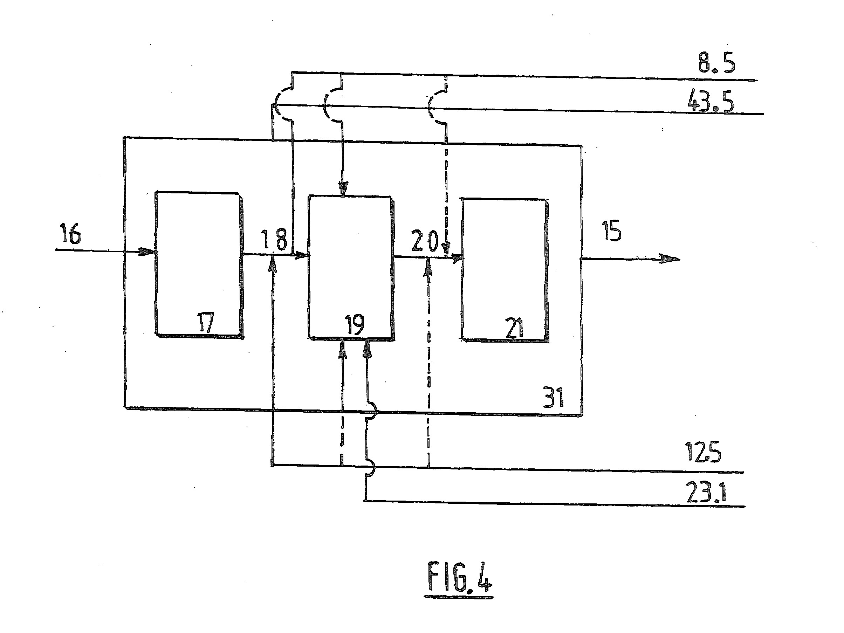

A more detailed view of a Steam Reformer is depicted in Figure 4 (with the potential recycles which characterized the invention). Pre-reforming 17 is carried out in those cases where it is considered to be advantageous to reform the heavier hydrocarbons in the hydrocarbon containing feed stream 16 thereby reducing cracking on the catalyst in the main steam methane reformer 19 and preventing excessive heat rise in the main reformer. The present process is not meant to be limited by the type of pre-reformer 17 utilized for carrying out the process of the present invention. Accordingly, any pre-reformer 17 that is known in the art may be used in the process of the present invention. The pre-reformer 17 can be a single high pressure (typically from about 25 to about 30 bar abs) adiabatic vessel where desulfurized natural gas preheated to around 600°C is fed to a bed filled with pre-reforming catalyst (typically catalyst with a high nickel content). Such vessels typically have an outlet temperature around 400°C. The pre-reformer 17 can also be a series of at least two adiabatic pre-reformers 17 with heating in between the vessels in order to provide additional benefits by minimizing the amount of fuel required and thus the amount of hydrogen to fuel. The advantage of such pre-reformers 17 is that the overall need for fuel to provide direct heat to the reforming reaction is reduced, hence naturally decreasing carbon dioxide production in the plant (leading to the high overall carbon dioxide recovery). In addition, the pre-reformer 17 may be operated in the same manner that is known in the art utilizing general conditions, including temperatures and pressures.

The next step of the preferred process involves reforming the pre-reformed gas stream 18 (or in the case where there is no pre-reforming, the hydrocarbon containing gas stream 16) in a steam methane reformer unit 19 in order to obtain a reformed stream 20. As with the pre-reformer 17, the present invention is not meant to be limited by the steam methane reformer unit 19 or the process for carrying out the reaction in the steam methane reformer unit 19. Accordingly, any steam methane reformer unit 19 known in the art may be used in the process of the present invention. By way of general description, with regard to the steam methane reformer unit 19 of Figure 4, the pre-reformed gas stream 18 (or hydrocarbon containing gas stream 16) will be combined with high pressure steam (not shown in Figure 4) before entering the steam methane reforming unit 19. Such steam methane reformer units 19 typically contain tubes (not shown) packed with catalyst (typically a nickel catalyst) through which the steam and gas stream 18 mixtures passes. An elevated temperature of about 860°C is typically maintained to drive the reaction which is endothermic. As used throughout with regard to the present invention, the phrase "steam methane reformer unit" refers not only to the actual reformer units, but also to all of the additional components that typically are considered to make up a steam methane reformer, including, but not limited to, one or more components selected from heat exchangers, the reformer, tubes with one or more types of catalyst, etc. Prior to be introduced into the actual reformer of the steam methane reformer 19, the stream to be treated will typically be compressed, e.g. to about 15 to 40 bar abs -or is already available at a sufficient pressure-, and combined with the steam as described hereinbefore. In those instances where pre-reforming is utilized, the stream to be pre-reformed will typically be compressed to e.g., about 15 to 40 bar abs, thereby resulting in a pre-reformed gas stream 18 which does not require further compression before being introduced into the steam methane reformer 19. The reaction product from the steam methane reformer unit 19 is principally a hydrogen rich effluent that contains hydrogen, carbon monoxide, methane, water vapor and carbon dioxide in proportions close to equilibrium amounts at the elevated temperature and pressure. This effluent is referred to as the stream 20 in the present process.

Once the reforming is carried out, the resulting stream 20 is subjected to a shift reaction in a water gas shift reactor 21 in order to obtain a syngas gas 15. The stream 20 is subjected to a shift reaction due to the high amount of carbon monoxide that is often present due to the steam methane reforming (the amount of carbon monoxide actually depends upon the composition of the initial stream injected into the steam methane reformer unit 19). The water gas shift reactor 21 functions to form additional hydrogen and carbon dioxide by further reacting or treating the stream 20 in order to obtain a syngas 15 for the process unit 0. The stream 20 is introduced into the water gas shift reactor 21 (which can contain a variety of stages or one stage; various stages not shown) along with steam (not shown) to form additional hydrogen and carbon dioxide. The water gas shift reactor 21 converts the carbon monoxide to carbon dioxide with the liberation of additional hydrogen by reaction at high temperature in the presence of the additional steam. Such reactors 21 typically operate at a temperature from about 200°C to about 500°C. In some cases the stream from the steam methane reformer 19 will be at a higher temperature so optionally the stream may first be cooled with a heat exchanger (typically a steam generator - not shown) before being passed through the water gas shift reactor 21. In a preferred alternative, the water gas shift reactor 21 is a multiple stage water gas shift reactor which includes high temperature shift (typically about 371°C or above), medium temperature shift (typically around 288°C), low temperature shift (typically about 177°C to 204°C) or any combination thereof. Such multiple stage water gas shift reactors are known and are used to concentrate the amount of carbon dioxide in the resulting gas stream by the manner in which the shifts are arranged (with the high temperature shift resulting in less carbon monoxide reaction and the low temperature shift resulting in more carbon monoxide reaction). The various recycled streams that could be introduced in the Steam Reforming unit and that are shown in Figure 4 will be described hereunder.

In addition, those of ordinary skill in the art will recognize that the present invention is not meant to be limited by the hydrocarbon feed stream 16 which will ultimately form the feed gas 15 utilized in the present invention. Depending upon the source of the hydrocarbon feed streams 16, those of ordinary skill in the art will recognize that there will likely be small amounts of other components present in the ultimate feed gas 15, e.g. inerts such as nitrogen. Other impurities could be also present such as water, alcohol and heavy hydrocarbons traces (particularly methanol, C₂- mainly ethane and ethylen-, aromatics) and others components at ppm level such as NH₃, H₂S. These impurities have been formed in the syngas generation process or have passed through the purification steps (desulfurization for instance).

Preferably, the process unit (0) utilized will be a pressure swing adsorption unit that is used to recovery and purify hydrogen, although those of ordinary skill in the art will recognize that any other unit that functions to carry out hydrogen purification may is also contemplated to be within the scope of the present invention. The pressure swing adsorption unit utilized can be any pressure swing adsorption unit known in the art and can comprise anywhere from two to sixteen adsorption beds (not shown) although more adsorption beds may be utilized. During the process of hydrogen purification, each of the adsorption beds (not shown) will individually under go a cycle that typically comprises: a) pressurization with pure hydrogen product and/or syngas, b) constant feed and hydrogen product release; c) pressure equalizations to transfer high pressure hydrogen-rich void gas to another bed at lower pressure; d) depressurization to slightly above atmospheric pressure; e) purge using hydrogen from co-current depressurization; and f) pressure equalizations with another bed at higher pressure to accept hydrogen-rich void gas. Preferably the adsorbents used in the pressure swing adsorption unit 0 include, but are not limited to, activated alumina, activated carbon, zeolites and their combinations.

The adsorbents could be in particle shape (beads, granulates, pellets...) or in structured shape (monolite, contactors, tissue...).

The PSA could be of the standard type or of the Rapid, even Ultra Rapid type with phase time around or below a second.

In any case, as a result of hydrogen purification, two separate gas streams are obtained-one that is a gaseous medium to very high purity hydrogen stream that is withdrawn and used as a hydrogen product 23 and the other which is often referred to as a pressure swing adsorption tail gas (referred to hereinafter as the "process stream. The process stream 1 is withdrawn from the adsorption beds of the pressure swing adsorption unit during the depressurization and purge steps. As used herein, the phrase "medium to very high purity hydrogen stream" refers to greater than 99% hydrogen. Furthermore, as used herein, the phrase "high purity hydrogen stream" refers to greater than 99.9% Hydrogen.

Depressurisation and purge are usually made at the lowest pressure which allows for the circulation of the gas towards the burners, i.e. just above atmospheric pressure. In the present process, due to the compression of the off-gas downwards the PSA, it could be interesting to maintain a higher pressure for the depressurization and purge steps in order to decrease both the size and the energy consumption of the compression. This higher pressure can be, for instance, in the range 1.5 to 3.0 bar abs. The corresponding decrease in hydrogen recovery could be compensated by the H₂ recycles provided in the present process.

The removal of hydrogen product 23 from the feed gas 15 in the process unit 0 results in a process stream 1 that is purged from the process unit 0. This process stream 1 contains at least carbon dioxide, hydrogen and methane. Typically, the process stream contains at least methane, carbon monoxide, carbon dioxide, water, any unrecovered hydrogen and possibly nitrogen and traces of impurities (such as methanol, C₂, aromatics, NH₃, H₂S...) at ppm level.

In the process of the present invention as depicted in Figure 1, the process stream (1) obtained from the process unit 0 is further treated to remove additional hydrogen and carbon dioxide by passing the process stream 0 through a first hydrogen selective membrane separation unit 42, a carbon dioxide separation unit 4, a second hydrogen selective membrane unit 7 and a carbon dioxide selective membrane unit 10.

Prior to being introduced into the first hydrogen selective membrane separation unit 42, the process stream 1 is compressed in a first compressor 40. Note that we suppose here that the process stream 1 is available at low pressure (<3bar abs); if it is produced directly at a pressure above 3 bar abs, the compression before the membrane separation unit may not be necessary. As used throughout, the term "compressor" is meant to include not only a compressor that has a single stage for compression but also a compressor that includes multiple stages for compression (typically from two to eight stages) with means for cooling between the various stages of the compressor. Note that the number of stages necessary to achieve the desired level of compression depends on the inlet/outlet pressure ratio. Such determinations are readily determinable to those skilled in the art. The degree of compression at this stage of the process (prior to the cooling of the stream in unit 4 will depend in part upon the type of hydrogen selective membrane utilized as well as the configuration of the carbon dioxide separation unit 4. More specifically, when the carbon dioxide separation unit 4 does not include a compressor, the process stream 1 will be compressed to a pressure equal to or greater than 35 bar abs.. However, when the carbon dioxide separation unit 4 does include a compressor 2 as a component of the carbon dioxide separation unit 4, then only partial compression will take place prior to the membrane unit 42. The intent is to have a process stream that is at a pressure equal to or greater than 35 bar abs while being treated in the carbon dioxide separation unit (4). More specifically, in order to accomplish this degree of compression, the process stream 1 may be compressed in a variety of manners.

For example, it may be possible to increase the pressure of the process stream 1 in the compressor 40 to 30 bar abs prior to the membrane separation unit and then raise the pressure to 50 bar abs in the compressor 2 that is a component of the carbon dioxide separation unit 4. Accordingly, only the fraction of the process stream that will be utilized/treated will typically be compressed.

Prior to being compressed, the process stream 1 may optionally be passed through one or more filters, including a series of filters (not shown) in order to remove any adsorbent dust that may have passed through from the process unit 0. Those skilled in the art will recognize that a variety of different types of filters may be utilized to filter the process stream, including, but not limited to, ceramic filters, baghouses, metallic filters, etc.

The temperature of the compressed process stream 41 is then adjusted to a temperature from about 20 °C to about 150 °C by subjecting the process stream 41 to heat exchange in a heat exchanger (not shown). In a preferred embodiment, the temperature of the process stream 41 is adjusted to a temperature from about 20°C to about 100°C. Any type of heat exchanger that is known in the art may be utilized to cool the process stream 41 to the desired temperature. Once this temperature is obtained, the temperature adjusted process stream 41 is passed through a first hydrogen selective membrane separation unit (42) to form a first hydrogen rich permeate stream 43. As used herein with regard to the first hydrogen rich permeate stream 43, the phrase "hydrogen rich" refers to the permeate stream having a percentage of hydrogen that is greater than the percentage of the other components in the hydrogen rich permeate stream 43. The hydrogen selective membrane preferentially permeates hydrogen over carbon monoxide, carbon dioxide, methane and nitrogen as well as any other components in the stream being subjected to the hydrogen selective membrane. In the preferred embodiment of the present process, the hydrogen selective membrane utilized has a hydrogen permeability that is at least 1.25, preferably 5, more preferably 8 and even more preferably 12, times that of the gas or gases from which the hydrogen is separated under the chosen operating conditions. Fluid permeation through a polymeric membrane can be described as the overall mass transport of a fluid species across the membrane, where the fluid species is introduced as feed at a higher pressure than the pressure on the opposite of the membrane, which is commonly referred to as the permeate side of the membrane. Typically in a separation process, the fluid species is a mixture of several components, at a minimum two, with the membrane exhibiting a higher selectivity for one component (for example "component A") over the other component (for example "component B"). Component A permeates faster than component B, therefore relative to the feed, the permeate is enriched in component A and the portion of the feed that does not permeate, commonly referred to as the retentate or residue is enriched in component B. With regard to this particular invention, the fluid is in a gaseous form and the polymeric continuous phase of the active membrane layer is nonporous. By "nonporous" it is meant that the continuous phase is substantially free of cavities or pores formed in a network through which migrating components of the gas mixture may flow from the feed to the permeate side of the membrane.

Transmembrane rate of transport of migrating components through the polymeric continuous phase is commonly referred to as flux and is driven primarily by molecular solution/diffusion mechanisms.

Preferably, the polymer is selectively gas permeable to the components, meaning that the gases to be separated from each other permeate the membrane at different rates. That is, a highly permeable gas will travel a distance through the continuous phase faster than will a less permeable gas. The selectivity of a gas permeable polymer is the ratio of the permeabilities of the individual component gases, e.g. Permeability of component A to permeability of component B. Hence, the greater the difference between transmembrane fluxes of individual components, the larger will be the component pair selectivity of a particular polymeric membrane.

With regard to the present process, the permeate stream that is obtained will generally contain from about 40% to about 90% (mole) hydrogen with the remaining part of the permeate stream comprising the other components contained in the process stream 41.

The remaining components in the process stream 41 form a first hydrogen lean residue stream 44. As used herein with regard to the hydrogen lean residue stream 44, the phrase "hydrogen lean" refers to the residue stream having a percentage of hydrogen that is less than that in the process stream 41.

The hydrogen selective membrane separation unit 42 utilized in the process of the present invention contains at least one membrane that is selective for hydrogen over the other components in the process stream 1. Note that the target molecule, in this case hydrogen, determines how the permeate stream is used. With regard to each of the membranes utilized in the present process, each membrane has a permeate side 42.1 and a residue side 42.2. Since the membrane is selective for hydrogen, it allows for the passing of hydrogen through the membrane to the permeate side 42.1 of the membrane. While a variety of different types of membranes may be utilized in the hydrogen selective membrane separation unit 42 of the process of the present invention, the preferred membrane is a polymeric membrane that is selective for hydrogen, the polymeric membrane being selected from one or more polyamides, polyaramides, polybenzimidazoles, polybenzimidazole blends with polyimides, polyamides/imides. Hydrogen selective membranes will have a H₂/CO₂ selectivity given by the ratio of H₂ permeance to the CO₂ permeance at the operating conditions that is greater than 1.25, preferably greater than 5, more preferably greater than 8.

The hydrogen selective membranes of the present invention can be fabricated into any membrane form by any appropriate conventional method. For example, the hydrogen selective membranes may be cast as a sheet at the desired thickness onto a flat support layer (for flat sheet membranes), or extruded through a conventional hollow fiber spinneret (for hollow fiber membranes). Processes for preparing uniformly dense membranes or asymmetric membranes are also available and known to those skilled in the art. In addition, it is possible to prepare composite membranes by casting or extruding the membrane over a porous support of another material in either flat film or hollow fiber form. The separating layer of the composite membrane can be a dense ultra-thin or asymmetric film. In the preferred embodiment of the present process, the hydrogen selective membranes are in the form of modules comprising membranes formed as either hollow fibers or spiral wound asymmetric flat sheets.

The first hydrogen selective membrane separation unit 42 includes at least one of the above noted membranes. With regard to the actual configuration of the first hydrogen selective membrane separation unit 42, the first hydrogen selective membrane separation unit 42 can take on any number of configurations. In one embodiment, there is only one membrane element in the first hydrogen selective membrane separation unit 42. In an alternative embodiment, the first hydrogen selective membrane separation unit 42 comprises a series of hydrogen selective membrane elements within a single membrane housing (not shown). With regard to this embodiment, the series of hydrogen selective membranes can be made up of hydrogen selective membranes of the same type selected from the hydrogen selective membranes detailed above or of two or more different hydrogen selective membranes selected from the hydrogen selective membranes detailed above. In the embodiment where there are two or more hydrogen selective membranes, the hydrogen selective membranes will preferably be of the same type and the same fabrication (for example, sheets or fibers). In a still further embodiment concerning the configuration of the first hydrogen selective membrane separation unit 42, the first hydrogen selective membrane separation unit 42 comprises two or more membrane housings with each of the housings having one or more hydrogen selective membranes as described hereinbefore. More specifically, in this embodiment, there can be two or more membrane housings, with each of the housings having either one hydrogen selective membrane or two or more hydrogen selective membranes of the same type or two or more hydrogen selective membranes of two of more different types. The resulting hydrogen selective membranes may be mounted in any convenient type of housing or vessel adapted to provide a supply of the compressed process stream 41, and removal of the first permeate stream 42.1 and first residue stream 42.2. The housing also provides a high-pressure side (for the process stream 41 and the first residue stream 44 and a low-pressure side of the hydrogen selective membrane (for the first permeate stream 43). As an example of configurations contemplated to be within the present invention, flat-sheet membranes can be stacked in plate-and-frame modules or wound in spiral-wound modules. Hollow-fiber membranes can be potted with a thermoset resin in cylindrical housings. The first hydrogen selective membrane separation unit 42 comprises one or more membrane modules or housings, which may be housed individually in pressure vessels or multiple elements may be mounted together in a sealed housing of appropriate diameter and length.

As noted above, as a result of passing the process stream 41 through the first hydrogen selective membrane separation unit 42, two separate streams are formed--a first hydrogen rich permeate stream 43 and a first hydrogen lean residue stream 44. The first hydrogen rich permeate stream 43 is optionally compressed in a compressor (not shown) before being recycled for use as a supplemental feed stream 43.2 for the process unit 0. In addition, the hydrogen rich permeate stream 43 may also be used 43.5 as a supplemental feed stream for the syngas producing unit 31), for instance upstream the reformer 19 or upstream the shift 21, and/or as a fuel in the same syngas producing unit and/or as a supplemental stream 43.4 for other processes, for instance as a fuel in the clean energy production unit associated with the hydrogen production unit.

These different recycle streams are shown in Figures 1 or 4.

More specifically, in the preferred embodiment, the hydrogen rich permeate stream 43 is utilized as two separate fractions-as a first hydrogen rich permeate fraction to be used as a supplemental feed stream 43.5 for processes that are upstream of the process unit 0 and as a second hydrogen rich permeate fraction 43.2 to be used as a supplemental feed stream in the process unit 0 with the objective being to optimize the use of the recycle stream 43 in order to maximize the conversion of carbon monoxide to carbon dioxide and hydrogen. Those of ordinary skill in the art will recognize that a number of different factors can contribute to the determination of the optima fractions including, but not limited to, the design of the plant and the size of the various components of the feed gas producing unit, the process unit 0, heat exchangers, carbon dioxide removal unit, etc.

In a still further modification to this embodiment, it is advantageous to further heat the first hydrogen rich permeate fraction 43.5 prior to this stream being added as a supplemental feed to the feed gas producing unit.

Note that the hydrogen rich permeate stream 43 could be issued as two or more streams at different pressures when using membranes installed in series on the residue. This is generally made to decrease compression energy, more particularly if it could avoid a compression machine on one of streams. It is an optimization well known by those ordinary skilled in the art of permeation.

In the next step of the process, the first hydrogen lean residue stream 44 that is obtained form the first hydrogen selective membrane separation unit 42 (or portion thereof) is sent to the carbon dioxide separation unit 4.

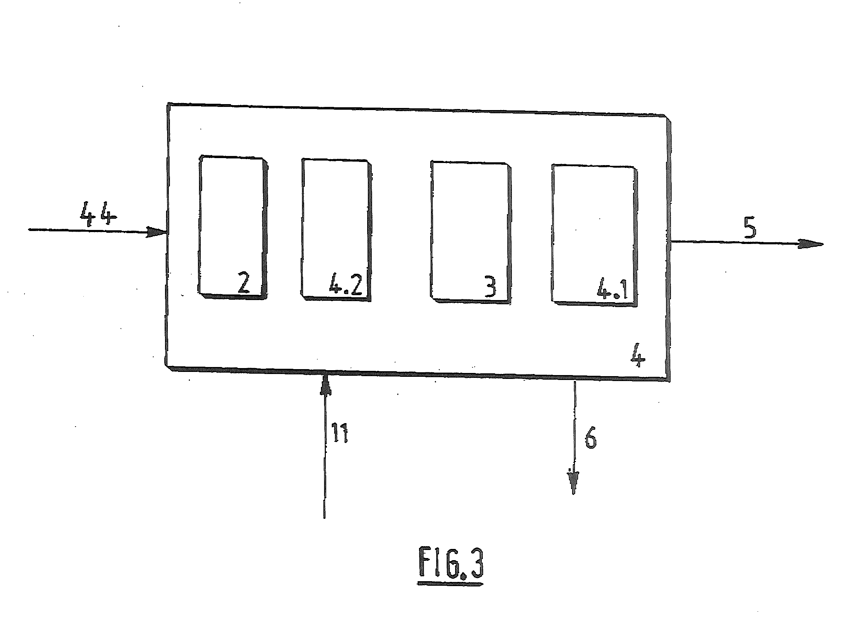

Figure 3 shows a more detailed view of this unit 4 with the corresponding subunits.

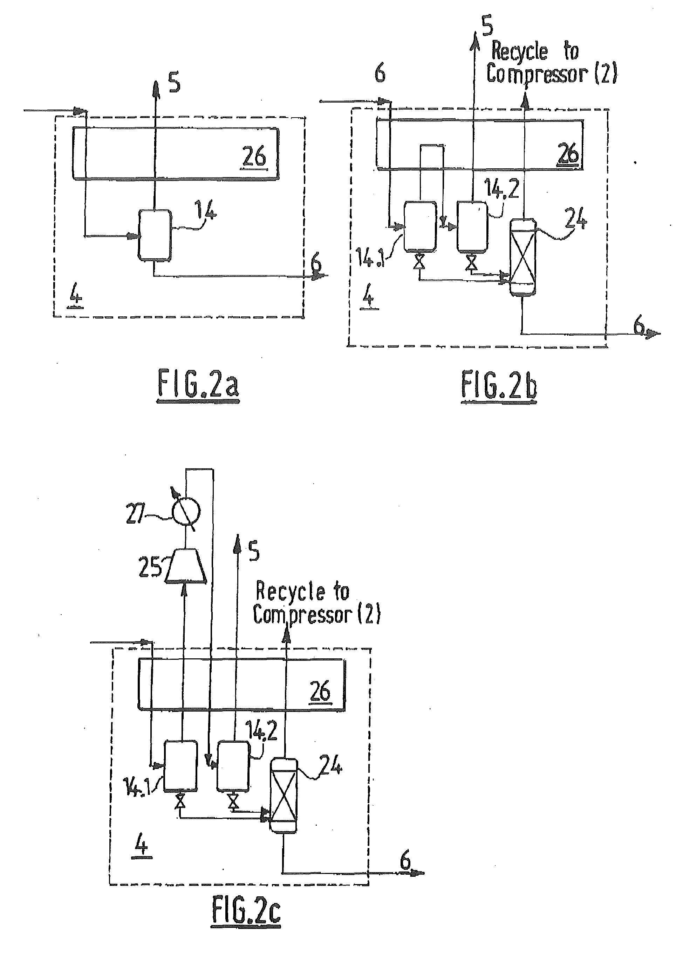

Stream 44 is subjected to cooling to a temperature that is equal to or less than -10°C through heat exchange in a heat exchanger 3. In a preferred embodiment, the first hydrogen lean residue stream 44 is cooled to a temperature that is equal to or less than -30°C. Any type of heat exchanger 3 that is known in the art may be utilized to cool the stream 44 to the desired temperature. This heat exchanger can be of a complex type with several inlets/outlets. Figure 2.c for instance shows such a multi-streams exchanger.

The next step of the process involves the separation and purification of the cooled hydrogen lean residue stream 44 to produce a carbon dioxide rich liquid stream 6 and a carbon dioxide lean non-condensable stream 5. This unit 4.1 may be any unit which is capable of separating/purifying carbon dioxide from a stream that contains carbon dioxide at a temperature that is equal to or less than -10°C, preferably equal to or less than -40°C. Those of ordinary skill in the art recognize that such sub-ambient separation/purification is known in the art. Accordingly, the present process is not meant to be limited by the carbon dioxide separation unit 4 or the process for carrying out the separation/purification in the carbon dioxide separation/ purification unit 4.1. As used throughout with regard to the present invention, the phrase "carbon dioxide separation unit" refers not only to the liquefaction units and/or distillation columns included therein, but also to all of the additional components that typically are considered to make up a carbon dioxide separation unit 4, including, but not limited to, one or more components selected from additional heat exchangers, additional compressors 2, dryers 4.2, etc. The term" dryers" 4.2 is a general wording for removal of impurities which could be incompatible with the downstream equipments (plugging of exchanger for instance..), or with the final use of the CO₂ (according to composition requirement).

Those of ordinary skill in the art recognize that such purification could be made through several kinds of processes and preferentially through an adsorption process. Well known adsorbents could be used (activated alumina, Silica Gel, activated carbon...). Preferentially, the process will be of the regenerative type, preferentially of the TSA (Temperature Swing Adsorption) type. The regeneration gas could be various one, internal stream such as part of the purified stream, permeate or residue stream from the membranes-particularly the residue from the carbon dioxide membrane- or external stream such as available dry nitrogen.

With regard to the present carbon dioxide separation unit 4, the separation/purification 4.1 is typically carried out utilizing single or multi-step partial liquefaction as depicted in Figure 2.a which includes one liquefaction unit 14; single or multi-step partial liquefaction in combination with at least one distillation column as depicted in Figure 2.b which includes two liquefaction units (a first liquefaction unit 14.1 and a second liquefaction unit 14.2) and one distillation column 24; and single or multi-step partial liquefaction in combination with at least one distillation column and at least one compressor and/or heat exchanger as depicted in Figure 2.c which includes two liquefaction units (a first liquefaction unit 14.1 and a second liquefaction unit 14.2), one distillation column 24, one compressor 25 and one heat exchanger 26. When two or more liquefaction units 14 are included in the carbon dioxide separation / purification unit 4.1, those skilled in the art will recognize that liquefaction within each of these units may take place at the same temperature (with different pressures) or at different temperatures (with the same pressure). In any event, the temperature for such liquefaction will generally be between about -10°C and -57°C, preferably between about -30°C and -57°C. Heat exchanger 3 can be fully integrated in the carbon dioxide separation/purification unit 4.1.

The optional driers could be installed prior to compression, during compression between stages of compression, after compression, after partial cooling. The driers could be installed prior to the hydrogen selective membrane separation unit 42, upstream or downstream the compression unit 40. In that position, the driers can improve the performances of the membrane which may be sensitive to water vapors.

Going back to Figure 1, as a result of the separation/purification that takes place in the carbon dioxide separation unit 4.1, there are produced a carbon dioxide lean non-condensable stream 5 and a carbon dioxide rich liquid stream 6. The carbon dioxide rich liquid stream 6 is withdrawn from the carbon dioxide separation unit 4 as a product stream and directed for further use. In addition, note that while cooling in the heat exchanger 26 of the carbon dioxide separation unit 4 - Fig 2a, b, c -can be accomplished utilizing an external coolant such as ammonia, the carbon dioxide rich liquid stream 6 may also be used, prior to the stream being withdrawn from the carbon dioxide separation unit 4, to provide cooling within the heat exchanger 26 of the carbon dioxide separation unit 4. Those of ordinary skill in the art will recognize that such streams 6 will typically include from about 90% to more than 99.9% carbon dioxide and may be used for enhanced oil recovery, industrial uses, sequestration in geological formations, etc. This carbon dioxide rich liquid stream 6 can be utilized as a liquid or may be vaporized to produce a carbon dioxide rich gas stream. If necessary, the liquid carbon dioxide could be pumped to a higher pressure and heated in the carbon dioxide separation unit 4 or outside this unit. The cooling provided by the heating and/or vaporization of the carbon dioxide could be used elsewhere in the processes for instance before a compression to reduce the size and the energy consumption of the machine or to optimize an equipment (for instance, using a cold temperature in the CO₂ membrane unit).

An additional purification unit -not shown- could be used on part or totality of the CO₂ produced stream to reach the final required purity (catalysis, adsorption...)

The carbon dioxide non-condensable stream 5 that is withdrawn from the carbon dioxide separation unit is typically at a high or medium pressure. As used herein with regard to the carbon dioxide non-condensable stream 5, the phrase "high pressure" refers to a pressure that ranges from about 50 bar abs to about 100 bar abs, preferably from about 50 bar abs to about 80 bar abs. As used herein with regard to the carbon dioxide non-condensable stream 5, the phrase "medium pressure" refers to a pressure that ranges from about 10 bar abs to about 49 bar abs, preferably from about 25 bar abs to about 49 bar abs.

As depicted on Figure 1, once the carbon dioxide lean non-condensable stream 5 is withdrawn from the carbon dioxide separation unit 4, it is passed through a second hydrogen selective membrane separation unit 7 where the hydrogen passes through the hydrogen selective membrane to form a hydrogen rich permeate stream 8. As used herein with regard to the hydrogen rich permeate stream 8, the phrase "hydrogen rich" refers to the permeate stream having a percentage of hydrogen that is greater than the percentage of the other components in the hydrogen rich permeate stream 8. The hydrogen selective membrane preferentially permeates hydrogen over carbon monoxide, carbon dioxide and methane as well as any other components in the stream being subjected to the hydrogen selective membrane. This unit could be similar to the first hydrogen selective membrane separation unit and therefore the same comments apply to this one. In an alternative embodiment of the present process, the carbon dioxide non-condensable stream 5 can be treated in the hydrogen selective membrane separation unit 7 at low pressure in order to increase the recovery of hydrogen. As used herein with regard to the carbon dioxide non-condensable stream 5, the phrase "low pressure" refers to a pressure that is equal to or less than 10 bar abs. Note that when the carbon dioxide non-condensable stream 5 is permeated at low pressure, the carbon dioxide non-condensable stream 5 pressure is reduced (as it will be at high to medium pressure) by any method known in the art such as one or more valves, a turbine, etc. (not shown) with or without energy recovery. In a still further embodiment, the hydrogen rich permeate stream 8 is permeated at the same pressure as the feed gas 15 of the process unit 0.

Note that the hydrogen rich permeate stream 8 could be issued as two or more streams at different pressures when using membranes installed in series on the residue. This is generally made to decrease compression energy, more particularly if it could avoid a compression machine on one of streams.

The remaining components in the carbon dioxide lean non-condensable stream 5 form a hydrogen lean residue stream 9. As used herein with regard to the hydrogen lean residue stream 9, the phrase "hydrogen lean" refers to the residue stream having a percentage of hydrogen that is less than that in the carbon dioxide non-condensable stream 5.

As noted above, as a result of passing the carbon dioxide non-condensable stream 5 through the hydrogen selective membrane separation unit 7, two separate streams are formed--a hydrogen rich permeate stream 8 and a hydrogen lean residue stream 9.

This second hydrogen rich permeate stream 8 is optionally compressed in a compressor (not shown) before being recycled for use as a supplemental feed stream 8.2 for the process unit 0. In addition, the hydrogen rich permeate stream 8 may also be used 8.5 as a supplemental feed stream for the syngas producing unit 31, for instance upstream the reformer 19 or upstream the shift 21, and/or as a fuel in the same syngas producing unit and/or as a supplemental stream 8.4 for other processes, for instance as a fuel in the clean energy production unit associated with the hydrogen production unit.

These different recycle streams are shown in Figures 1 or 4.

More specifically, in the preferred embodiment, the hydrogen rich permeate stream 8 is utilized as two separate fractions-as a first hydrogen rich permeate fraction to be used as a supplemental feed stream 8.5 for processes that are upstream of the process unit 0 and as a second hydrogen rich permeate fraction 8.2 to be used as a supplemental feed stream in the process unit 0 with the objective being to optimize the use of the recycle stream 43 in order to maximize the conversion of carbon monoxide to carbon dioxide and hydrogen.

In a first option ,as depicted in Figure 1, the hydrogen rich permeate stream 8 is optionally compressed in a compressor (not shown) before being recycled for use as a supplemental feed stream for the process unit 0 or as a supplemental feed stream , for the syngas generation plant 31 or for other processes upstream. It could also be used as a fuel, for the syngas generation plant 31 or for other processes upstream. More specifically, in the preferred embodiment, the hydrogen rich permeate stream 8 is utilized as two separate fractions-as a first hydrogen rich permeate fraction 8.1 to be used as a supplemental feed stream for processes that are upstream of the process unit 0, mainly for the syngas generation unit 31 and as a second hydrogen rich permeate fraction 8.2 to be used as a supplemental feed stream in the process unit 0 with the objective being to optimize the use of the recycle stream 8 in order to maximize the conversion of carbon monoxide to carbon dioxide and hydrogen. This particular embodiment has already been discussed here-above and is not developed again.

In a still further embodiment of the present invention, a water gas shift reactor may be installed along the line transporting the hydrogen rich permeate streams 43 and/or 8 in order to reduce the carbon monoxide that may be present in these streams. It is especially preferred to reduce the level of carbon monoxide to such a low level that there is no further incentive to convert the carbon monoxide contained in these streams.

Note that the streams 43 and 8, i.e. the two permeate streams from the hydrogen selective membrane separation units 42 and 7 can be mixed together -or only a part of these streams- before been recycled. In that case, the gas shift reactor can be placed on the mixture stream. In the preferred embodiment, this (these) water gas shift reactor(s) would be at a low temperature.. As used herein, the phrase "low temperature water gas shift reactor" refers to a water gas shift reaction that generally occurs in the 180 to 240°C range to further reduce carbon monoxide levels compared to the higher temperature water gas shift reactor which generally operates in a higher temperature range and is utilized to convert bulk (higher percentages) of carbon monoxide. Low temperature water gas shift reactors of the type contemplated in the present invention are known in the art and accordingly will not be described in great detail herein other than to not that such reactors require proper heating means (not shown) and steam injection (not shown).

In a still further modification to this embodiment, it is advantageous to further heat the second hydrogen rich permeate fraction in a heat exchanger prior to this stream 8.5 being added as a supplemental feed inside the syngas producing unit.

Note that, as already mentioned, the hydrogen rich permeate stream 8 could be issued as two or more streams at different pressures when using membranes installed in series on the residue. This is generally made to decrease compression energy, more particularly if it could avoid a compression machine on one of streams.

With regard to the additional streams, as depicted on Figure 1 while the hydrogen product stream 23 is generally recovered as product, a portion 23.1 of this stream 23 can be used for hydrogen fueling of the syngas producing unit 31 or a steam producing unit 23.2, not shown on Figure 1. This leads to a clean combustion without production of carbon dioxide, thus decreasing the global CO₂ emission.

In the next step of the present process, as shown in Figure 1, the hydrogen lean residue stream 9 is passed through a carbon dioxide selective membrane separation unit 10 in order to form a carbon dioxide enriched permeate stream 11. As used herein with regard to the carbon dioxide enriched permeate stream 11, the phrase "carbon dioxide enrich" refers to the permeate stream having a percentage of carbon dioxide that is greater than the percentage of the other components in the carbon dioxide enriched permeate stream 11. The carbon dioxide selective membrane of the carbon dioxide selective membrane separation unit 10 is used to preferentially permeate carbon dioxide over carbon monoxide, methane and nitrogen as well as any other components in the stream being subjected to the carbon dioxide selective membrane. In the preferred embodiment of the present process, the carbon dioxide selective membrane utilized had a carbon dioxide permeability that is more than 5 times, preferably greater than 10 times and even more preferably greater than 20 times that of the gas or gases from which the carbon dioxide is separated under the chosen operating conditions, with the exception of hydrogen.

The remaining components in the hydrogen lean residue stream 9 form a carbon dioxide depleted residue stream 12. As used herein with regard to the carbon dioxide depleted residue stream 12, the phrase "carbon dioxide depleted" refers to the residue stream having a percentage of carbon dioxide that is less than that in the stream introduced into the carbon dioxide membrane separation unit 10 -the hydrogen lean residue stream 9-.

The carbon dioxide selective membrane separation unit 10 utilized in the process of the present invention contains at least one membrane that is selective for carbon dioxide over the other components in the hydrogen lean residue stream 9. Note that the target molecule, in this case carbon dioxide, determines how the permeate stream is used. With regard to each of the membranes utilized in the present process, each carbon dioxide selective membrane has a permeate side 10.1 and a residue side 10.2. Since the membrane is selective for carbon dioxide, it allows for the passing of carbon dioxide through the membrane to the permeate side 10.1 of the membrane.

While a variety of different types of membranes may be utilized in the carbon dioxide selective membrane separation unit 10 of the process of the present invention, the preferred membrane is a polymeric membrane that is selective for carbon dioxide that is selected from one or more polyimides, polyetherimides polysulfone, polyethersulfones, polyarylsulfone, polycarbonate, tetrabromo- bisphenol A polycarbonate, tetrachlorobisphenol A polycarbonate, polydimethylsiloxane, natural rubber, cellulose actetate, cellulose triacetate, ethyl cellulose, PDD-TFE and polytriazole.

With regard to each of the carbon dioxide selective membranes utilized in the carbon dioxide selective membrane separation unit 10 of the present process, each carbon dioxide selective membrane has a permeate side 10.1 and a residue side 10.2. Since the membrane is selective for carbon dioxide, it allows for the passing of carbon dioxide through the membrane to the permeate side 10.1 of the membrane. While the membrane is selective for carbon dioxide, those skilled in the art will recognize that a minor portion of the other components in the hydrogen lean residue stream 9 will also pass through the carbon dioxide selective membrane to become a part of the permeate. Accordingly, with regard to the present process, the permeate stream that is obtained will generally contain from about 40% to about 90% carbon dioxide with the remaining part of the permeate stream comprising the other components contained in the hydrogen lean residue stream 9. As a result of passing the hydrogen lean residue stream 9 into the carbon dioxide selective membrane separation unit 10 and through the membrane, this stream is separated into two streams-one which is considered to be carbon dioxide enriched and one which is considered to be carbon dioxide depleted.

While a variety of different types of membranes may be utilized in the carbon dioxide selective membrane separation unit 10 of the process of the present invention, the preferred membrane is made of any number of polymers that are suitable as membrane materials. With regard to the membranes of the present invention, these polymers include, but are not limited to, substituted or unsubstituted polymers selected from polysiloxane, polycarbonates, silicone-containing polycarbonates, brominated polycarbonates, polysulfones, polyether sulfones, sulfonated polysulfones, sulfonated polyether sulfones, polyimides and aryl polyimides, polyether imides, polyketones, polyether ketones, polyamides including aryl polyamides, poly(esteramide-diisocyanate), polyamide/imides, polyolefins such as polyethylene, polypropylene, polybutylene, poly-4-methyl pentene, polyacetylenes, polytrimethysilylpropyne, fluorinated polymers such as those formed from tetrafluoroethylene and perfluorodioxoles, poly(styrenes), including styrene-containing copolymers such as acrylonitrile-styrene copolymers, styrene-butadiene copolymers and styrene-vinylbenzylhalide copolymers, cellulosic polymers, such as cellulose acetate-butyrate, cellulose propionate, ethyl cellulose, methyl cellulose, cellulose triacetate, and nitrocellulose, polyethers, poly(arylene oxides) such as poly(phenylene oxide) and poly(xylene oxide), polyurethanes, polyesters (including polyarylates), such as poly(ethylene terephthalate), and poly(phenylene terephthalate), poly(alkyl methacrylates), poly(acrylates), polysulfides, polyvinyls, e.g., poly(vinyl chloride), poly(vinyl fluoride), poly(vinylidene chloride), poly(vinylidene fluoride), poly(vinyl alcohol), poly(vinyl esters) such as poly(vinyl acetate) and poly(vinyl propionate), poly(vinyl pyridines), poly(vinyl pyrrolidones), poly(vinyl ketones), poly(vinyl ethers), poly(vinyl aldehydes) such as poly(vinyl formal) and poly(vinyl butyral), poly(vinyl amides), poly(vinyl amines), poly(vinyl urethanes), poly(vinyl ureas), poly(vinyl phosphates), and poly(vinyl sulfates), polyallyls, poly(benzobenzimidazole), polyhydrazides, polyoxadiazoles, polytriazoles: poly(benzimidazole), polycarbodiimides, polyphosphazines, and interpolymers, including block interpolymers containing repeating units from the above such as terpolymers of acrylonitrile-vinyl bromide-sodium salt of para-sulfophenylmethallyl ethers, and grafts and blends containing any of the foregoing. The polymer suitable for use is intended to also encompass copolymers of two or more monomers utilized to obtain any of the homopolymers or copolymers named above. Typical substituents providing substituted polymers include halogens such as fluorine, chlorine and bromine, hydroxyl groups, lower alkyl groups, lower alkoxy groups, monocyclic aryl, lower acyl groups and the like.

With regard to one embodiment of the present invention, the preferred polymers include, but are not limited to, polysiloxane, polycarbonates, silicone-containing polycarbonates, brominated polycarbonates, polysulfones, polyether sulfones, sulfonated polysulfones, sulfonated polyether sulfones, polyimides, polyetherimides, polyketones, polyether ketones, polyamides, polyamide/imides, polyolefins such as poly-4-methyl pentene, polyacetylenes such as polytrimethysilylpropyne, and fluoropolymers including fluorinated polymers and copolymers of fluorinated monomers such as fluorinated olefins and fluorodioxoles, and cellulosic polymers, such as cellulose diacetate and cellulose triacetate. Examples of preferred polyimides are Ultem 1000, P84 and P84-HT polymers, and Matrimid 5218.

Of the above noted polymeric membranes, the most preferred membranes are those made of polyimides. More specifically, polyimides of the type disclosed in U.S. Patent No. 7,018,445 and U.S. Patent No. 7,025,804, each incorporated herein in their entirety by reference. With regard to these types of membranes, the process of the present invention preferably utilizes a membrane comprising a blend of at least one polymer of a Type 1 copolyimide and at least one polymer of a Type 2 copolyimide in which the Type 1 copolyimide comprises repeating units of formula I 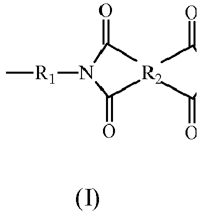 in which R₂ is a moiety having a composition selected from the group consisting of formula A, formula B, formula C and a mixture thereof, 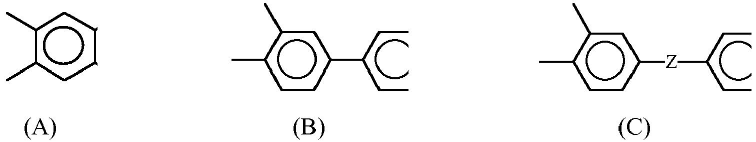 Z is a moiety having a composition selected from the group consisting of formula L, formula M, formula N and a mixture thereof; and 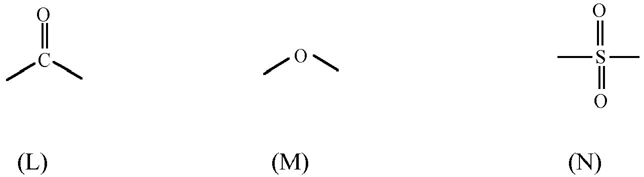 R₁ is a moiety having a composition selected from the group consisting of formula Q, formula S, formula T, and a mixture thereof, 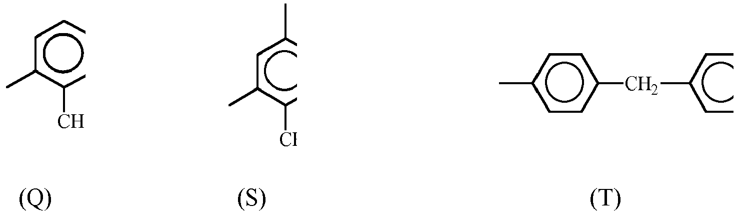 in which the Type 2 copolyimide comprises the repeating units of formulas IIa and IIb 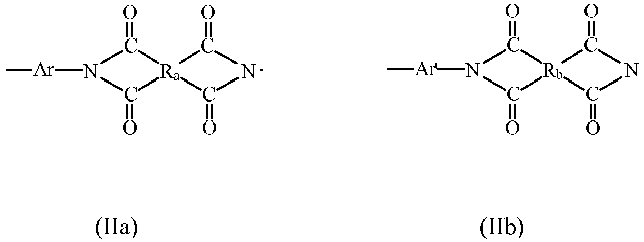 in which Ar is a moiety having a composition selected from the group consisting of formula U, formula V, and a mixture thereof, 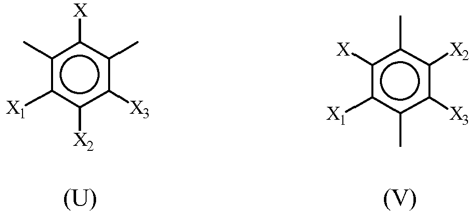 in which
X, X₁, X₂, X₃ independently are hydrogen or an alkyl group having 1 to 6 carbon atoms, provided that at least two of X, X₁, X₂, or X₃ on each of U and V are an alkyl group,
Ar' is any aromatic moiety,
Rₐ and R_{b} each independently have composition of formulas A, B, C, D or a mixture thereof, and 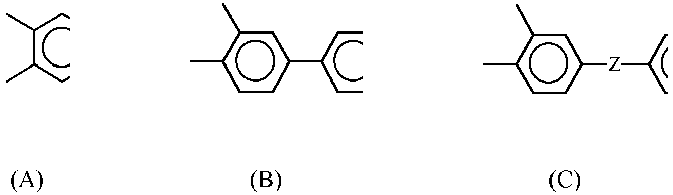 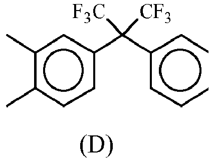 Z is a moiety having composition selected from the group consisting of formula L, formula M, formula N and a mixture thereof

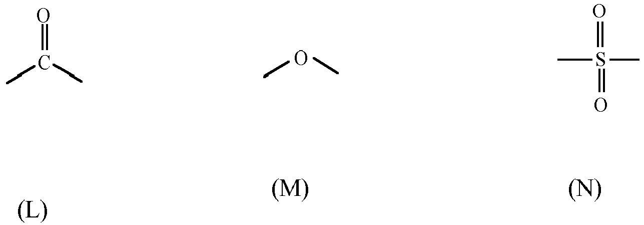

The material of the membrane consists essentially of the blend of these copolyimides. Provided that they do not significantly adversely affect the separation performance of the membrane, other components can be present in the blend such as, processing aids, chemical and thermal stabilizers and the like.

In a preferred embodiment, the repeating units of the Type 1 copolyimide have the composition of formula Ia.

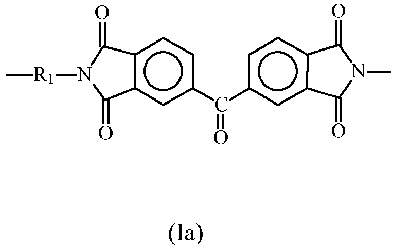

Wherein R₁ is as defined hereinbefore. A preferred polymer of this composition in which it is understood that R₁ is formula Q in about 16% of the repeating units, formula S in about 64% of the repeating units and formula T in about 20% of the repeating units is available from HP Polymer GmbH under the tradename P84

In another preferred embodiment, the Type 1 copolyimide comprises repeating units of formula Ib.

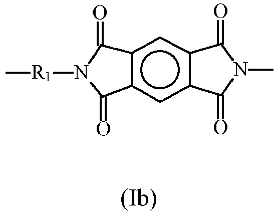

Wherein R₁ is as defined hereinbefore. Preference is given to using the Type 1 copolyimide of formula Ib in which R₁ is a composition of formula Q in about 1-99% of the repeating units, and of formula s in a complementary amount totaling 100% of the repeating units.

In yet another preferred embodiment, the Type 1 copolyimide is a copolymer comprising repeating units of both formula Ia and Ib in which units of formula Ib constitute about 1 - 99% of the total repeating units of formulas Ia and Ib. A polymer of this structure is available from HP Polymer GmbH under the tradename P84-HT325.

In the Type 2 polyimide, the repeating unit of formula IIa should be at least about 25%, and preferably at least about 50% of the total repeating units of formula IIa and formula IIb. Ar' can be the same as or different from Ar.

The polyimides utilized to form the membranes of the present process will typically have a weight average molecular weight within the range of about 23,000 to about 400,000 and preferably about 50,000 to about 280,000.

The carbon dioxide selective membranes of the present process can be fabricated into any membrane form by any appropriate conventional method as noted hereinbefore with regard to the hydrogen selective membranes (i.e., flat sheet membranes or hollow fiber membranes). While the carbon dioxide selective membranes do not have to be in the same form as the hydrogen selective membranes, in one preferred embodiment, the form of the carbon dioxide selective membranes is in the hollow fiber form and the hydrogen selective membranes are in the same form.

As with the hydrogen selective membrane separation unit 7, the carbon dioxide membrane separation unit 10 includes at least one of the above noted membranes. With regard to the actual configuration of the carbon dioxide selective membrane separation unit 10, the carbon dioxide selective membrane separation unit 10 can take on any number of different configurations as discussed hereinbefore with regard to the hydrogen selective membrane separation units 40,7.

As noted and shown on Figure 1, as a result of passing the hydrogen lean residue stream 9 through the carbon dioxide selective membrane separation unit 10, two separate streams are formed--a carbon dioxide enriched permeate stream 11 and a carbon dioxide depleted residue stream 12 wherein the enrichment and depletion of carbon dioxide is with reference to the feed stream fed to the carbon dioxide selective membrane separation unit 10. The carbon dioxide enriched permeate stream 11 may be further utilized in a variety of manners.

More specifically, the carbon dioxide enriched permeate stream 11 may be recycled to (or prior to) the carbon dioxide separation/purification unit 4.1, recycled prior to compressor 2 or within the compressor 2 between two of the stages of compression (not shown in Figure 1) or optionally compressing the carbon dioxide enriched permeate stream 11 and recycling the optionally compressed carbon dioxide enriched permeate stream 11 to be used as a supplemental feed stream 11.1 in other processes such as a supplemental feed stream for a water gas shift reactor in the hydrogen production plant (not shown). As for the hydrogen membranes, the carbon dioxide enriched permeate stream 11 can be produced at two or more different pressures if economically interesting.

The carbon dioxide depleted residue stream 12 that is obtained from the carbon dioxide selective membrane separation unit 10 can be withdrawn for further use. For example, the carbon dioxide depleted residue stream can be used 12.5 as a fuel (for example as a steam methane reformer fuel), as a feed stream (for example as a steam methane reformer feed stream) or as both a fuel and a feed stream in this process or used in other processes 12.3 such as in another hydrogen generation plant. In addition, the carbon dioxide depleted residue stream 12 can be used to regenerate any dryers that may be positioned within the process schematic of the present invention to remove moisture and other impurities if any., Its pressure could be reduced by any method known in the art such valves, turbines...with or without energy recovery. This stream could be heated before pressure reduction to increase the energy recovery if any. It could be noted that using part or the totality of this stream as a fuel (or in another process) helps to remove gases like nitrogen from the global system avoiding an accumulation of inerts due to the several possible recycles.

In Figure 4 that represents a syngas generation unit of the Steam Reforming type, the potential recycles of the first hydrogen rich permeate stream 43.5, of the second hydrogen rich permeate stream 8.5, these streams being supposed not mixed before ,of the carbon dioxide depleted residue 12.5, and of a part of the hydrogen production 23.1 are shown as supplemental feed stream at the steam methane reformer 19 itself and/or at the water gas shift reactor 21 and/or or as a supplemental fuel for a steam methane reformer 19. It is especially preferable to use the hydrogen rich permeate streams as a fuel to the steam methane reformer 19 since by doing so, it is possible to eliminate or reduce the carbon dioxide emissions from the steam methane reformer 19 as the natural gas fuel has been eliminated/minimized.

In that case, it could be a low pressure hydrogen permeate, i.e; at the minimum pressure which allows for injecting this stream in the burners (generally less than 2 bar abs, approximatively at 1.5 bar abs). As mentioned before, another part of the hydrogen rich permeates could be produced at a higher pressure for another use.

The operating temperatures for the hydrogen selective membranes and the carbon dioxide selective membranes are each independently selected based on the physical properties of each membrane such that it is mechanically stable and a sufficient gas flux can be maintained across the membrane. Typically, the stream being fed to each of the membrane separation units 42, 7, 10 will be heated or cooled, if necessary, to a temperature which ranges from about -55°C to about 150°C. In other words, the process of membrane separation in each of these units 42, 7, 10 typically operates at the noted temperature. In one alternative, the hydrogen lean reside stream 9 is fed into the carbon dioxide selective membrane unit 10 at low to sub-ambient temperatures, preferably from -55°C to about 30°C, preferably from -55°C to about 10°C. In such cases, the carbon dioxide selective membranes are cold membranes. With regard to this particular alternative, the cold brought to the carbon dioxide lean non-condensable stream 5 is taken for instance from the liquid carbon dioxide stream 6 ,( preferably after the step of pumping if any).

In still another alternative, the carbon dioxide lean non-condensable stream 5 from the carbon dioxide separation unit 4 is fed to the hydrogen selective membrane separation unit 7 after being heated to a temperature from about 50°C to about 150°C in an optional heat exchanger. With regard to this particular alternative, the heat brought to the carbon dioxide lean non-condensable stream 5 is taken for instance from the process stream 1 after the step of compression.

In an even further still embodiment of the present invention, it is also possible to incorporate an optional water gas shift reactor just prior to the hydrogen and carbon dioxide membrane units 7, 10 in order to further convert any carbon monoxide presenting the carbon dioxide lean non-condensable stream 5. This water gas shift reactor would also preferably be a low temperature water gas shift reactor as described hereinbefore. Note that when this option is utilized, the membranes utilized in the hydrogen and carbon dioxide membrane units 7, 10 will be designed to address wet syngas.

### LIST OF ELEMENTS

### FIGURE 1

- 0: process unit
- 1: process stream
- 4: carbon dioxide separation unit
- 5: carbon dioxide lean non-condensable stream
- 6: carbon dioxide rich liquid stream
- 7: second hydrogen selective membrane separation unit
- 7.1: permeate side of hydrogen selective membrane
- 7.2: residue side of hydrogen selective membrane
- 8: second hydrogen rich permeate stream
- 8.2, 8.4 8.5: hydrogen rich permeate fractions
- 9: second hydrogen lean residue stream
- 10: carbon dioxide selective membrane separation unit
- 10.1: permeate side of carbon dioxide selective membrane
- 10.2: residue side of carbon dioxide selective membrane
- 11: carbon dioxide enrich permeate stream
- 11.1: carbon dioxide enrich permeate fraction
- 12: carbon dioxide depleted residue stream
- 12.3; 12.5: carbon dioxide depleted residue fractions
- 15: syngas
- 16: hydrocarbon containing feed stream
- 23: hydrogen product stream from pressure swing adsorption unit
- 23.1; 23.2: hydrogen fraction
- 31: syngas producing unit
- 40: compressor on the process stream
- 41: compressed process stream
- 42: first hydrogen selective membrane separation unit
- 42.1: permeate side of hydrogen selective membrane
- 42.2: residue side of hydrogen selective membrane
- 43: first hydrogen rich permeate stream
- 43.2; 43.4; 43.5: first hydrogen rich permeate fractions
- 44: first hydrogen lean residue stream

### FIGURE 2 (other elements)

- 14: liquefaction unit
- 14.1: first liquefaction unit
- 14.2: second liquefaction unit
- 24: distillation column
- 25: additional compressor
- 26: additional heat exchanger
- 27: cooling element for additional compressor

### FIGURE 3 (other elements)

- 2: compressor of the carbon dioxide separation unit
- 3: heat exchanger of the carbon dioxide separation unit
- 4.1: separation/purification unit of the carbon dioxide separation unit
- 4.2: dryers of the carbon dioxide separation unit

### FIGURE 4 (other elements)

- 17: pre-reformer
- 18: pre-reformed gas stream
- 19: steam methane reformer unit
- 20: reformed stream
- 21: water gas shift reactor

## Claims

1. A process for producing hydrogen and capturing carbon dioxide in a hydrogen generation plant, the process comprising the steps of:
a) subjecting a syngas (15) coming from a syngas producing unit (31) to a process unit (0) to obtain a hydrogen product stream (23) and a hydrogen depleted process stream (1);
b) compressing at least a portion of the process stream (1) in a compression unit (40) and passing the compressed stream (41) through a first hydrogen selective membrane separation unit (42) to form a first hydrogen rich permeate stream (43) with the remaining components in the compressed process stream (41) forming a first hydrogen lean residue stream (44);
c) cooling to a temperature equal to or less than -10°C , and purifying/separating the hydrogen lean residue stream (44) in a carbon dioxide separation unit (4) to produce a carbon dioxide rich liquid stream (6) and a carbon dioxide lean non-condensable stream (5);
d) withdrawing the carbon dioxide lean non-condensable stream (5) from the carbon dioxide separation unit (4) and passing the carbon dioxide lean non-condensable stream (5) through a second hydrogen selective membrane separation unit (7) to form a hydrogen rich permeate stream (8) with the remaining components in the carbon dioxide lean non-condensable stream (5) forming a hydrogen lean residue stream (9);
e) passing the hydrogen lean residue stream (9) through a carbon dioxide selective membrane separation unit (10) to form a carbon dioxide enriched permeate stream (11) with the remaining components in the hydrogen lean residue stream (9) forming a carbon dioxide depleted residue stream (12);
process in which:
- at least a part of the hydrogen rich permeate stream (43) of the first hydrogen selective membrane separation unit (42) is recycled for use (43.5) as a supplemental feed stream and/ or as a fuel in the syngas producing unit (31), and/or (43.2) to the process unit (0) and/or as a fuel (43.4) in the optional clean energy production unit;
and
- at least a part of the hydrogen rich permeate stream (8) of the second hydrogen selective membrane separation unit (7) is recycled for use as a supplemental feed stream and/or as a fuel (8.5) in the syngas producing unit (31), and/or (8.2) to the process unit (0) and/or as a fuel (8.4) in the optional clean energy production unit;
and
- at least a part of the carbon dioxide enriched permeate stream (11) of the carbon dioxide selective membrane separation unit (10) is recycled to the carbon dioxide separation unit (4)
and
- the carbon dioxide depleted residue stream (12) of the carbon dioxide selective membrane separation unit (10) is recycled to be used as a supplemental feed stream and/or as a fuel (12.5) for the syngas producing unit (31) or in another process.

2. Process according to claim 1, wherein at least a portion of the produced hydrogen (23) is used as fuel (23.2) in a clean energy production unit.

3. Process according to claim 2, wherein the carbon dioxide depleted residue stream (12) of the carbon selective membrane separation unit (10) is recycled in the clean energy production unit.

4. Process according to one of claims 1 to 3, wherein a hydrocarbon containing feed stream (16) is treated in the syngas producing unit (31) to obtain a syngas (15);

5. Process according to claim 4, wherein the syngas producing unit (31) is a hydrocarbon Steam Reformer

6. Process according to claim 1 or claim 2, wherein at least a portion (23.1) of the hydrogen product stream (23) is used as a fuel for the syngas producing unit (31).

7. Process according to one of claims 1 to 6, wherein the capture rate of carbon dioxide from the syngas (15) is equal to or greater than 80%, preferably is equal to or greater than 90%.

8. Process according to one of claims 1 to 7, wherein the overall capture rate of carbon dioxide from the hydrogen production process is equal to or greater than 50%, preferably equal to or greater than 75%.

9. Process according to one of claims 1 to 8, wherein the process unit (0) is a pressure swing adsorption unit and the process stream (1) is a tail gas from the pressure swing adsorption unit.

10. Process according to one of claims 1 to 9, wherein the separation and purification of the cooled process stream in the carbon dioxide separation unit (4) is carried out by single or multi-step partial liquefaction, compression and distillation or any combination of single or multi-step partial liquefaction, compression and distillation.

11. Process according to one of claims 1 to 10, wherein the carbon dioxide rich liquid stream (6) that is withdrawn is vaporized to produce a carbon dioxide rich gas stream or pumped and optionally heated to produce a high pressure CO₂ stream.

12. Process according to one of claims 1 to 11, wherein the process stream is subjected to a purification unit to remove impurities such as water, hydrocarbons, alcohols, NH₃, H₂S.., and preferentially the purification unit comprises an adsorption unit

13. Process according to one of claims 1 to 12, wherein the process stream is compressed to a pressure above 35 bar abs and is cooled to a temperature equal to or less than -30°C.

14. Process according to one of claims 1 to 13, wherein the first hydrogen rich permeate stream (43) and/or the second hydrogen rich permeate stream (8) is subjected to a shift reaction in an optional water gas shift reactor prior to being recycled , preferentially the water gas shift reaction is a low temperature water gas shift reaction.

15. Process according to one of claims 1 to 6, wherein the carbon dioxide lean non-condensable stream (5) is subjected to a shift reaction in an optional water gas shift reactor prior to being passed thorough the hydrogen and carbon dioxide membrane separation units (7, 10), preferentially the water gas shift reaction is a low temperature water gas shift reaction.

16. Process according to one of claims 1 to 15, wherein at least one stream among the first hydrogen rich permeate stream (43), the second hydrogen rich permeate stream (8), the carbon dioxide enriched permeate stream (11) is withdrawn at least 2 different pressures.
